Europäisches Patentamt

**European Patent Office**

Office européen des brevets

(19)

(11) Veröffentlichungsnummer: **0 016 408**
**B1**

(12) **EUROPÄISCHE PATENTSCHRIFT**

(45) Veröffentlichungstag der Patentschrift:
**29.12.82**

(51) Int. Cl.³: **B 01 J 47/00, C 02 F 1/42**

(21) Anmeldenummer: **80101265.9**

(22) Anmeldetag: **12.03.80**

(54) **Härtefühler für eine Wasserenthärtungsanlage und Anlage zum Enthärten von Wasser.**

(30) Priorität: **20.03.79 DE 2910869**

(43) Veröffentlichungstag der Anmeldung:
**01.10.80 Patentblatt 80/20**

(45) Bekanntmachung des Hinweises auf die Patenterteilung:
**29.12.82 Patentblatt 82/52**

(84) Benannte Vertragsstaaten:
**AT BE CH DE FR GB IT**

(56) Entgegenhaltungen:
**DE-A-1 947 887**
**DE-A-2 017 303**
**FR-A-2 135 159**
**US-A-2 810 692**
**US-A-3 250 392**
**US-A-3 479 864**
**US-A-3 512 643**
**US-A-3 578 164**
**US-A-3 831 754**
**US-A-4 158 628**

(73) Patentinhaber: **Spiegl, Karl, Landhausstrasse 35,**
**D-7031 Aidlingen (DE)**

(72) Erfinder: **Spiegl, Karl, Landhausstrasse 35,**
**D-7031 Aidlingen (DE)**

(74) Vertreter: **Wolff, Michael, Dipl.-Phys., Kirchheimer**
**Strasse 69, D-7000 Stuttgart 75 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Härtefühler für eine Wasserenthärtungsanlage und
## Anlage zum Enthärten von Wasser

Die Erfindung betrifft einen Härtefühler für eine Wasserenthärtungsanlage, mit einer regenerierbaren Füllung aus ionenaustauschendem Schrumpfharz, welche eine einzige freie Oberfläche aufweist, deren Flächennormale die Ausdehnungsrichtung beim Regenerieren darstellt.

Ein mit Schrumpfharz gefüllter Härtefühler für eine Wasserenthärtungsanlage ist aus der DE-A-2 017 303 (Autotrol) bekannt. Er gehört zu einer unter der Bezeichnung »Sensatrol« bekannten Einrichtung zur Anlagensteuerung. Dieser Härtefühler weist eine von seinem Gehäuse eingespannte Membran auf, die ständig an der nur zeitweilig ebenen freien Oberfläche der Harzfüllung anliegt und an deren Zentrum ein aus dem Gehäuse ragender, gefederter Stab angreift, der für die Anlage sorgt und bei sich infolge einer Harzschrumpfung auswölbender Membran einen mechanischen Steuerimpuls überträgt, der die Regenerierungsphase der Anlage einleitet. Die Membran wird mit zunehmender Schrumpfung der Harzfüllung stärker ausgewölbt und ist überhaupt nur bei vollständig regeneriertem Harz eben.

Die Erfindung betrifft auch eine Anlage zum Enthärten von Wasser, mit einem Ionenaustauscher-Kunstharz enthaltenden, regenerierbaren Enthärter; mit einem übersättigte Kochsalzlösung enthaltenden Salzbehälter; mit mehreren Ventilen, die an Einlaß und Auslaß des Enthärters sowie an den Salzbehälter und an eine Abwasserleitung angeschlossen und mit einer Zuleitung für hartes Wasser sowie einer Ableitung für weiches Wasser versehen sind; und mit einem Härtefühler, dessen Einlaß mit dem Enthärter verbunden ist.

Wird eine Anlage dieser Art mit dem aus der DE-A-2 017 303 bekannten Härtefühler ausgerüstet, dann muß der Auslaß des Härtefühlers mit der Abwasserleitung verbunden werden, weil eine Verbindung mit der Ableitung für weiches Wasser, das normalerweise steht, zu einem Staudruck des Wassers in der Harzfüllung führen würde, welcher die Membran unter Überwindung der Federkraft von der freien Oberfläche der Harzfüllung einzuebnen versuchen würde, wobei dem Steuerstab Quellung statt Schrumpfung vorgetäuscht würde und es infolgedessen nie zu einer Regenerierungsphase käme. Beim Einsatz des bekannten Härtefühlers sind also die zu bemängelnden Verluste an Testwasser während der Härteprüfungen unvermeidlich und eine wünschenswerte Dauerprüfung kommt deshalb nicht in Betracht.

Der Erfindung liegt die Aufgabe zugrunde, einen Härtefühler für eine Wasserenthärtungsanlage und eine solche Anlage zu schaffen, welche eine Dauerprüfung der Wasserhärte ohne Testwasserverbrauch ermöglichen.

Diese Aufgabe ist nach der Erfindung bei einem Härtefühler der eingangs genannten Art durch einen Kolben, der wenigstens während der Härtefühlung die freie Oberfläche berührt und der entweder ständig auf dieser frei schwimmt oder während der Regenerierung mittels einer Hubvorrichtung über der freien Oberfläche in der Schwebe gehalten ist, und bei einer Anlage der oben genannten Art dadurch gelöst, daß der Auslaß des Härtefühlers über ein die genannten Ventile zusammenfassendes Mehrwegeventil mit der Ableitung für weiches Wasser verbindbar ist.

Vorteilhafterweise wird dadurch erreicht, daß Testwasser den Härtefühler ständig durchströmen kann, wenn die Verbindung zwischen Auslaß des Härtefühlers und Ableitung für weiches Wasser über das Mehrwegeventil hergestellt ist, weil der Spalt zwischen dem Kolben und dem ihn führenden Gehäuse des Härtefühlers für einen Druckausgleich auf beiden Kolbenseiten sorgt; daß bei der ständigen Härtefühlung das Testwasser der Ableitung für weiches Wasser zugeführt wird und daß durch eine Umstellung des Mehrwegeventiles auf eine Verbindung des Auslasses des Härtefühlers mit der Abwasserleitung während der Regenerierungsphase, in der Salzwasser durch den Härtefühler strömt, eine gleichzeitige Regenerierung der Harzfüllung des Härtefühlers ohne Versalzung des weichen Wassers stattfindet.

Aus der US-A-3 479 864 (Patterson) ist ein analytisches Verfahren zum Messen der relativen freien Energie eines Fluids durch Feststellen der Änderung des Volumens von Harzkörnern bei konstantem Druck oder der Änderung des Druckes bei konstantem Körnervolumen im Falle des Kontaktes mit dem Fluid mittels eines auf einer Körnerfüllung abgesetzten Kolbens bekannt, der pneumatisch oder durch ein Gewicht belastet ist. Der diesen Kolben aufweisende Meßapparat kann zwar als Härtefühler für eine Wasserenthärtungsanlage verwendet werden, ist dafür jedoch nicht ohne weiteres geeignet, da der Kolben weder ständig auf der freien Oberfläche der Körnerfüllung frei schwimmt noch während der Regenerierung mittels einer Hubvorrichtung über der freien Oberfläche in der Schwebe gehalten würde.

Im folgenden sind Ausgestaltungen und Weiterbildungen des erfindungsgemäßen Härtefühlers durch ihre wesentlichen Merkmale charakterisiert:

Eine Feder des Härtefühlers, deren Rückstellkraft der Quellkraft der Harzfüllung entgegengesetzt ist, greift am Kolben an, damit die von der Kolbenstange verursachte Druckdifferenz zwischen Kolbenober- und -unterseite ausgeglichen wird. Das Einwirken beispielsweise einer Schraubenfeder auf den Kolben führt dazu, daß dieser der sinkenden freien Oberfläche der Harzfüllung stetig folgt, wenn das Harz schrumpft, so daß die Lage des andernfalls eventuell zurückbleibenden Kolbens keinen zu geringen Grad der Erschöpfung des Enthärters anzeigen kann.

Der Kolben des Härtefühlers ist zum Verdichten der Harzfüllung konisch geformt. Die Kegelstumpfform des Kolbens bewirkt eine Verdichtung des Harzes, die ein zu weites Eindringen des Kolbens in das Harz verhindert.

Der Kolben des Härtefühlers weist eine scharfe Abstreifkante auf seiner der Harzfüllung zugewandten Stirnseite auf. Diese Kante verhindert das möglicherweise störende Eindringen von Harzkörnern in den Hubraum hinter dem Kolben.

Der Kolben des Härtefühlers ist mit einem Kolbenring versehen, der den Durchtritt von Harzkörnern durch den Ringspalt zwischen Kolben und Gehäusemantel vermeiden hilft.

Der Kolben des Härtefühlers ist mit einem in die Harzfüllung eintauchenden, verjüngten Stempel versehen, der Träger beispielsweise einer Signalfarbe sein kann, die bei ihrem Auftauchen aus der Harzfüllung anzeigt, daß der Kolben nicht mehr auf der Harzfüllung schwimmt.

Der Kolben des Härtefühlers ist scheibenförmig ausgebildet, so daß nur ein verhältnismäßig kleiner Hubraum im Härtefühler benötigt wird.

Der Kolben des Härtefühlers ist mit einem Permanentmagneten gekoppelt, durch den ein berührungsloser elektrischer Schalter magnetisch betätigbar ist. Dieser Schalter ist selbstverständlich außerhalb des Gehäuses des Härtefühlers angeordnet und erspart in Verbindung mit dem Permanentmagneten eine Gehäusedurchführung, deren Abdichtung stets problematisch ist.

Der Härtefühler ist mit einer Kolbenstange versehen, durch deren herausragendes Ende ein elektrischer Schalter mechanisch betätigbar ist, womit eine Grundanordnung für viele mögliche Ausführungsformen bestimmt ist. Für die Gehäusedurchführung von Kolbenstangen kann man sich die Kenntnisse und Fertigkeiten auf diesem Gebiet zunutze machen. Der Schalter erlaubt natürlich wie die bereits vorher erwähnten Schalter eine Folgesteuerung der Anlage.

Die Hubvorrichtung des Härtefühlers, die es erlaubt, den Kolben während der Enthärtungsphase und/oder der Regenerierungsphase von der Harzfüllung des Härtefühlers getrenntzuhalten, um ihn nur zu Testzwecken kurzzeitig auf die Harzfüllung aufzusetzen, greift an der Kolbenstange an.

Die Hubvorrichtung des Härtefühlers weist eine bewegbare Steuerkurve und einen mit ihr zusammenwirkenden Steuernocken auf, der an der Kolbenstange befestigt ist. Dieses Kurvengetriebe kann ein geradlinig hin und her bewegtes Lineal als Steuerkurve und einen Stift als Steuernocken besitzen, so daß es einfach ausführbar ist.

Die Hubvorrichtung des Härtefühlers weist einen drehbaren Exzenter und einen mit ihm zusammenwirkenden Pleuelrahmen auf, der mit der Kolbenstange fest verbunden ist. Dieses Kurvengetriebe hat den Vorteil, daß statt einer hin und her gehenden Bewegung direkt eine Drehbewegung des Exzenters benutzt werden kann und diese Drehbewegung einfach von einem Uhrwerk ableitbar ist.

Die Hubvorrichtung des Härtefühlers weist einen Elektromagneten mit einem verschiebbaren Anker auf, der mit der Kolbenstange fest verbunden ist. Diese Ausgestaltung wird man nur benutzen, wenn der Kolben vorübergehend von der Harzfüllung des Härtefühlers abgehoben werden soll, weil der Elektromagnet andernfalls mit den bekannten nachteiligen Folgen ständig erregt sein muß. Der Einsatz des Hubmagneten wird daher auf die Regenerierungsphase beschränkt.

Die Hubvorrichtung des Härtefühlers weist einen zentral an der Kolbenstange und peripher an einem mit dem Härtefühler verbundenen Zusatzgehäuse befestigte, wasserdichte Membran und eine auf der dem Kolben abgekehrten Seite der Membran an das luftdichte Zusatzgehäuse angeschlossene Verbindungsleitung auf, die innerhalb des Gehäuses eines Mehrwegeventiles der Wasserenthärtungsanlage in eine Leitung mündet, welche von einem Salzbehälter zu einem Enthärter der Anlage führt. Wenn dabei in der zuletzt genannten Leitung an der Mündungsstelle der Verbindungsleitung Salzlösung vorbeiströmt, entsteht nach dem Prinzip der Wasserstrahlpumpe in der Verbindungsleitung und damit auf der einen Seite der Membran ein Unterdruck, der den Kolben hebt. Das geschieht zu Beginn der Regenerierungsphase, welcher nicht mit dem Anfang des Quellvorganges in der Harzfüllung des Härtefühlers zusammenfällt, welcher um so später folgt, je weiter der zu dem Härtefühler gehörende Tauchfilter von der zuerst regenerierten Zone der Harzfüllung des Enthärters entfernt ist.

Der Härtefühler ist mit einem berührungslosen Schalter versehen, der durch den Kolben kapazitiv betätigbar ist. Diese Ausgestaltung erfordert nicht einmal einen Permanentmagneten, der mit dem Kolben gekoppelt ist.

Der Härtefühler ist als Taucheinheit ausgebildet, die in eine Harzfüllung eines Enthärters der Wasserenthärtungsanlage versenkbar ist. Infolgedessen werden keine Wasserleitungen gebraucht, die den Härtefühler einerseits mit einem in die Harzfüllung versenkten Tauchfilter und andererseits mit dem Mehrwegeventil verbinden. Der Härtefühler ist von einem Teil des in der Harzfüllung des Enthärters strömenden Wassers auf einem Ersatzweg durchströmbar. Der Härtefühler weist einen eingebauten elektrischen Schalter auf, der über ein mindestens zweiadriges, durch die Harzfüllung des Enthärters auf die Außenseite des Enthärters führbares Kabel mit einer elektrischen Steuerung eines Ventils der Wasserenthärtungsanlage verbindbar ist. Damit ist ein in Anordnung und Anschluß besonders einfacher Härtefühler geschaffen, der auch für geringes Druckgefälle in der Harzfüllung des Enthärters geeignet ist. Durch einen luftgefüllten Hohlkolben des Härtefühlers, welcher auf dessen Harzfüllung schwimmt und relativ zu dem stationären Schalter im Gehäuse des Härtefühlers verschiebbar ist, wird erreicht, daß der Schalter mittelbar durch die Verschiebung des Kolbens betätigbar ist und der Hohlkolben selbst genügend Auftrieb hat, um eine Kompression der Harzfüllung zu verhindern.

Als elektrischer Schalter des Härtefühlers ist ein Reed-Schalter und zu dessen Betätigung ein kolbenfester Permanentmagnet vorgesehen, so daß der Schaltkontakt in einer Schutzgasatmosphäre liegt und im mehr oder weniger salzigen Wasser nicht korrodieren kann sowie berührungslos betätigbar ist.

Der Hohlkolben des Härtefühlers ist mit einer zylindrischen Verlängerung zur Aufnahme des freihängenden Reed-Schalters versehen, welche in Kolbennähe Durchflußdurchbrüche aufweist und mit ihrem kolbenfernen Rand den kreisringförmigen Permanentmagneten aufnimmt. Die Durchflußdurchbrüche erlauben den Wasseraustausch zwischen Innerem und Äußerem der als Magnethalter dienenden Kolbenverlängerung, die dem Reed-Schalter den benötigten Raum bietet. Der Ringmagnet läßt Platz für den relativen Ein- und Austritt des Reed-Schalters, der vom Kolben bewegt wird.

Die Harzfüllung des Härtefühlers liegt an einem in deren Ausdehnungsrichtung verstellbar am Gehäusemantel des Fühlers gelagerten Teil an. Die Verstellung gestattet eine Nachjustierung des Schaltpunktes, welche erforderlich werden kann, wenn die Harzquellung verhältnismäßig gering ist, weil beispielsweise das Wasser einen hohen Chloridgehalt hat oder zur Regenerierung die sogenannte Sparbesalzung durchgeführt wird.

Der Kolben des Härtefühlers weist mindestens einen Durchbruch, vorzugsweise mehrere Schlitze, auf. Dabei ist der Einlaß des Härtefühlers oberhalb des Kolbens angeordnet und weist der Härtefühler eine unterhalb der Harzfüllung angeordnete, diese tragende Filterscheibe auf, die über dem Auslaß des Härtefühlers liegt. In diesem Fall verhindert die Durchströmungsrichtung von oben nach unten ein Aufschwemmen der Harzfüllung, die außerdem lückenlos bewässert wird.

Offenbar sind einige der vorstehend genannten Merkmale des erfindungsgemäßen Härtefühlers zu verschiedenen Ausführungsformen kombinierbar, während andere sich gegenseitig ausschließen und nur alternativ verwirklichbar sind. Den im folgenden gegebenen Ausführungsbeispielen des Härtefühlers sind mehrere Kombinationsmöglichkeiten entnehmbar.

Bei einer bevorzugten Ausführungsform der erfindungsgemäßen Wasserenthärtungsanlage ist der Auslaß des Härtefühlers an eine Bohrung im Gehäuse des Mehrwegeventils angeschlossen, welche in einen Einlaß des Ventils mündet, der mit dem Auslaß des Enthärters verbunden ist. Dadurch entfällt bei an das Gehäuse des Mehrwegeventiles angeflanschtem Härtefühler eine besondere Leitung zwischen Härtefühler und Wasservorrat.

Bei der bevorzugten Ausführungsform der Anlage, deren Mehrwegeventil in der Nähe des Anschlusses der Abwasserleitung ein Auslaßventil aufweist, ist der Auslaß des Härtefühlers an eine Bohrung im Gehäuse des Mehrwegeventils angeschlossen, welche in der Nähe des Auslaßventiles zur Abwasserleitung hin ausmündet. Diese Bohrung läßt sich an dem Gehäuse eines handelsüblichen Mehrwegeventiles nachträglich noch anbringen.

Im folgenden ist die Erfindung anhand einer durch die Zeichnung beispielhaft dargestellten vollständigen Ausführungsform der erfindungsgemäßen Anlage und mehrerer Ausführungsbeispiele erfindungsgemäßer Härtefühler für diese Anlage im einzelnen erläutert. Es zeigt

Fig. 1 eine schematisch dargestellte Gesamtansicht der Anlage mit geschnittenem Mehrwegeventil;

Fig. 2 dasselbe Ventil in gleicher Darstellung in einem anderen Zustand;

Fig. 3 einen vertikalen Längsschnitt durch einen ersten Härtefühler, der zur Anlage gemäß Fig. 1 gehört;

Fig. 4, 7 und 8 teilweise längsgeschnitten dargestellte Seitenansichten eines zweiten, fünften bzw. sechsten Härtefühlers;

Fig. 5, 6 und 9 teilweise längsgeschnitten und abgebrochen dargestellte Seitenansichten eines dritten, vierten bzw. siebten Härtefühlers;

Fig. 10 eine schematisch dargestellte Teilansicht der Anlage mit aufgebrochenem Enthärter;

Fig. 11 einen Längsschnitt durch einen neunten Härtefühler der Anlage gemäß Fig. 12; und

Fig. 12 einen Fig. 6 entsprechenden, vollständigen vertikalen Längsschnitt durch einen zehnten Härtefühler.

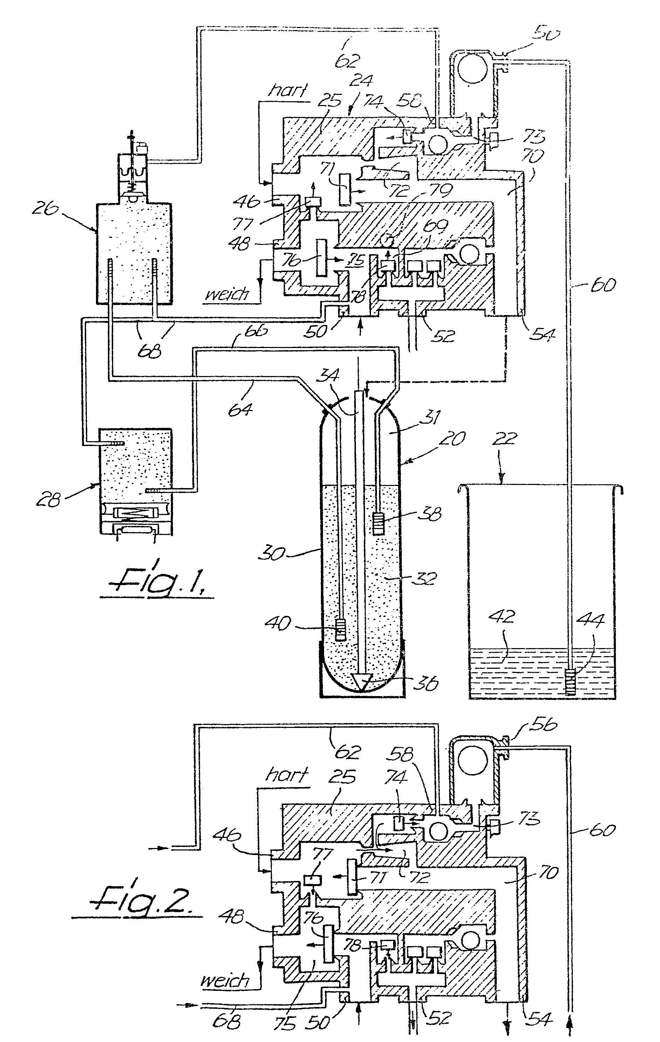

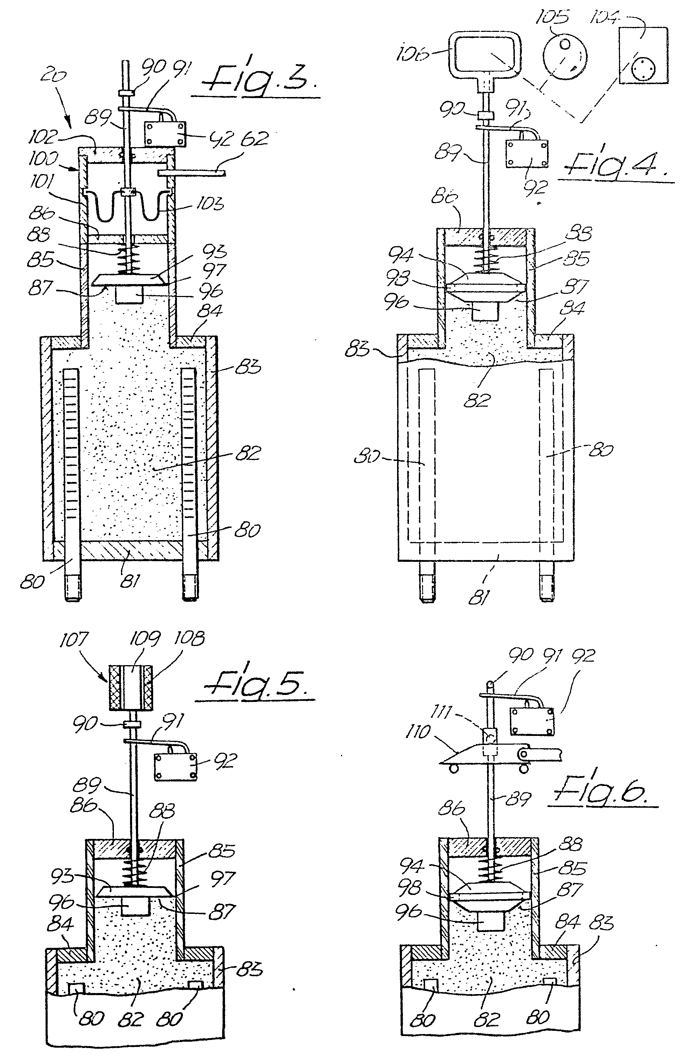

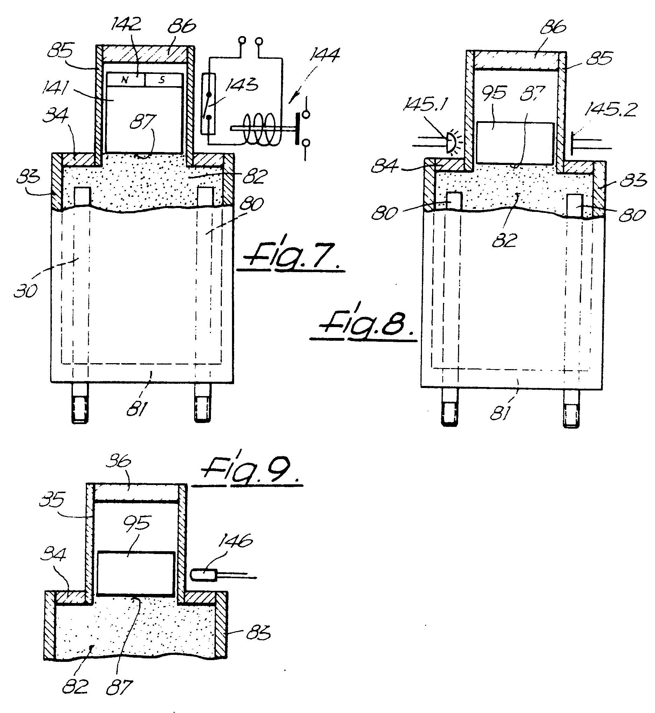

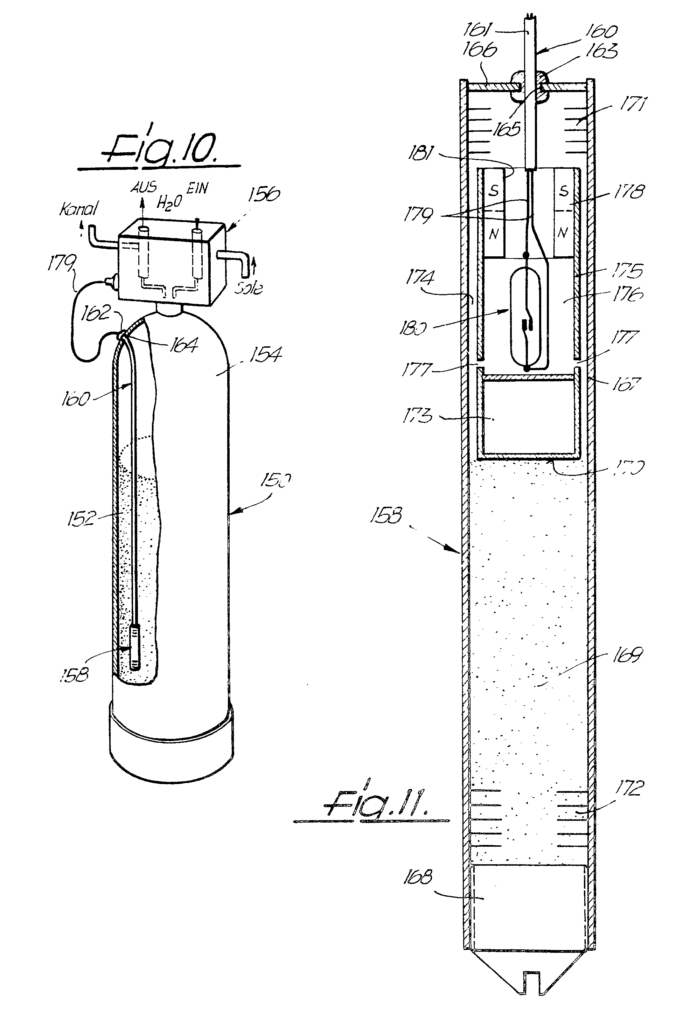

Die erfindungsgemäße Anlage gemäß Fig. 1 bis 3 besteht im wesentlichen aus einem Enthärter 20, aus einem Salzbehälter 22, aus einem Mehrwegeventil 24, aus zwei Härtefühlern 26 bzw. 28, aus mehreren, noch zu bezeichnenden Wasserleitungen und aus einer nicht dargestellten elektrischen Steuerung des Mehrwegeventils 24 mittels der Härtefühler 26 und 28, von denen Fühler 26 später im einzelnen erläutert wird.

Der Enthärter 20 ist ein aufrechtstehender, geschlossener, kreiszylindrischer Tank 30 mit einer durch Na-Ionen regenerierbaren Füllung 32 aus Ionenaustauscher-Kunstharz, das die Ca- und Mg-Ionen des harten Wassers gegen Na-Ionen tauscht. Auf der Längsachse des Tankes steht ein Entnahmerohr 34, das an seinem bis auf den Grund der Harzfüllung 32 eingetauchten unteren Ende mit einem Filter 36 versehen ist. In verschiedener Höhe der Harzfüllung 32 befinden sich zwei eingebettete Tauchfilter 38 und 40 mit Spalten gegen den Durchtritt von Harzkörnern und für den Durchtritt von Wasser.

Der Salzbehälter 22 ist oben offen und an seinem Grund befindet sich in einer übersättigten Kochsalzlösung 42 ein den Tauchfiltern 38 und 40 entsprechender weiterer Tauchfilter 44.

Das Mehrwegeventil 24 besitzt einen Anschluß 46 für hartes Wasser und einen Anschluß 48 für weiches Wasser. Außerdem sind ein Anschluß 50 für das Entnahmerohr 34, ein Anschluß 52 für eine Abwasserleitung, ein Anschluß 54 für eine durch eine gestrichelte Linie angedeutete Verbindungsleitung zu dem Raum 31 innerhalb des Tanks 30 über dessen Harzfüllung 32, ein Anschluß 56 für eine vom Tauchfilter 44 im Salzbehälter 22 ausgehende Steigleitung 60 für Sole und ein Anschluß 58 für eine zum Härtefühler 26 führende Unterdruckleitung 62 vorhanden.

Die zwei Einlässe der beiden Härtefühler 26 und 28 sind über je eine Leitung 64 bzw. 66 an den zugeordneten Tauchfilter 38 bzw. 40 angeschlossen. Die zwei Auslässe der beiden Härtefühler 26 und 28 sind über eine gegabelte gemeinsame Leitung 68 mit dem Anschluß 50 für das Entnahmerohr 34 verbunden.

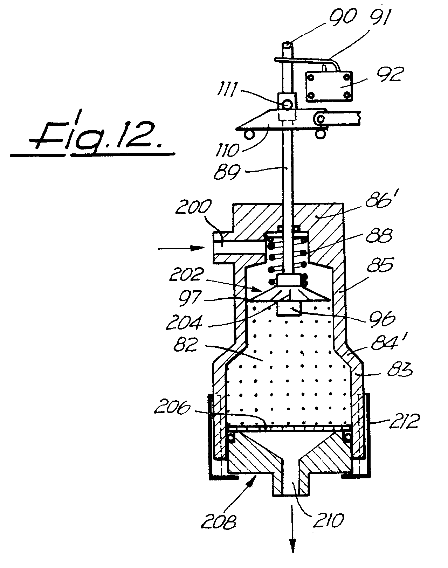

Das Mehrwegeventil 24 enthält in seinem Gehäuse 25 einen den Anschluß 46 mit dem Anschluß 54 verbindenden ersten Hauptkanal 70 mit einem steuerbaren Ventil 71, das durch einen Injektor 72 überbrückt ist. Den Injektor 72 und den Anschluß 56 verbindet ein erster Seitenkanal 73 mit einem steuerbaren Ventil 74. Zwischen diesem Ventil 74 und dem Anschluß 56 befindet sich der Anschluß 58 an den Seitenkanal 73. Die Anschlüsse 48 und 50 sind durch einen zweiten Hauptkanal 75 mit einem steuerbaren Ventil 76 verbunden. Die zwischen den Anschlüssen 46 und 48 einerseits sowie den Ventilen 71 bzw. 76 andererseits liegenden Abschnitte der Hauptkanäle 70 bzw. 75 stehen über ein steuerbares Ventil 77 miteinander in Verbindung. Der zwischen dem Ventil 76 und dem Anschluß 50 gelegene andere Abschnitt des zweiten Hauptkanales 75 steht über ein steuerbares Ventil 78 mit dem Anschluß 52 in Verbindung. Wenn die Durchfluß-Ventile 74, 77 und 78 geschlossen sind, haben die Durchfluß-Ventile 71 sowie 76 geöffnet und umgekehrt, wie Fig. 1 für die Enthärtungsphase bzw. Fig. 2 für die Regenerierungsphase zeigt. Wahlweise kann die Leitung 68 über eine dem Ventil 78 benachbarte Bohrung 79 im Gehäuse 25 in den zweiten Seitenkanal 69 mit dem Ventil 78 münden, der den zweiten Hauptkanal 75 mit dem Anschluß 52 verbindet.

Beim Enthärten strömt, solange die Ventile 74 und 77 geschlossen sind, hartes Wasser über das geöffnete Ventil 71 und den Injektor 72 durch den Hauptkanal 70 vom Anschluß 46 zum Anschluß 54, von dem aus das harte Wasser in den Tankraum 31 gelangt. Das angesammelte harte Wasser durchsickert nun die Harzfüllung 32 des Tankes 30 und wird darin enthärtet, bis es den Filter 36 erreicht hat, von dem aus es als enthärtetes, weiches Wasser im Entnahmerohr 34 hochsteigt. Das weiche Wasser gelangt schließlich vom Anschluß 50 bei geöffnetem Ventil 76 sowie geschlossenen Ventilen 77 und 78 über den Hauptkanal 75 zum Anschluß 48.

Gleichzeitig fließen zwei Ströme mehr bzw. weniger enthärteten Wassers über die Leitungen 64 bzw. 66 in und durch die Härtefühler 26 bzw. 28 und von dort aus über die gemeinsame Leitung 68 am Anschluß 50 in den Hauptkanal 75, so daß das während der Enthärtungsphase ständig durch die Härtefühler fließende Testwasser dem den Enthärter 20 verlassenden Wasser zugemischt wird.

Auch beim Regenerieren strömt hartes Wasser vom Anschluß 46 bei geschlossenem Ventil 71 über den vom Injektor 72 gebildeten Bypass des Hauptkanales 70 zum Anschluß 54. Der Injektor 72 mischt dem harten Wasser Sole zu, die er bei geöffnetem Ventil 74 über den Seitenkanal 73 und die Steigleitung 60 aus dem Salzbehälter 22 saugt. Das Hartwasser/Sole-Gemisch mit hohem Kochsalzgehalt gelangt vom Anschluß 54 in die Harzfüllung 32 des Enthärters 20, regeneriert diese und strömt dann über das Entnahmerohr 34 bei geschlossenem Ventil 76 und geöffnetem Ventil 78 vom Anschluß 50 zum Anschluß 52. Damit während der Regenerierungsphase wenigstens Hartwasser zur Verfügung steht, ist vorgesehen, daß ein Teil des Hartwassers vom Anschluß 46 bei geöffnetem Ventil 77 zum Anschluß 48 fließt. Falls der Anschluß 48 jedoch mit einem Vorratsbehälter für Weichwasser in Verbindung steht, das nicht mit Hartwasser vermischt werden soll, wird man das Ventil 77 geschlossen halten oder die dadurch vermittelte Verbindung der beiden Hauptkanäle 70 und 75 aufheben. Gleichzeitig strömt das erwähnte regenerierende Gemisch auf den zuvor im Zusammenhang mit der Enthärtungsphase bezeichneten Wegen durch die beiden Härtefühler 26 und 28 zum Anschluß 50, so daß außer dem Enthärter 20 auch die Härtefühler regeneriert werden.

Alle Härtefühler gemäß Fig. 3 bis 9 besitzen als Ein- und Auslässe Leitungsenden 80, die als Spaltfilter ausgebildet sind. Diese ragen vertikal von unten durch einen kreisscheibenförmigen Gehäuseboden 81 in eine darauf geschichtete Füllung 82 aus ionenaustauschendem, regenerierbarem Schrumpfharz, welche seitlich von einem an den Boden 81 anschließenden, vertikalen, kreiszylindrischen Gehäusemantel 83 umschlossen ist, in bezug auf den die beiden Leitungsenden 80 diametral weit auseinanderliegend angeordnet sind.

Bei den Härtefühlern nach Fig. 3 bis 6 und 7 bis 9 ist der Gehäusedeckel 84 ringförmig und an seinem inneren Rand ist ein vertikaler Zylinder 85 mit einer oberen Abschlußscheibe 86 befestigt. Der Zylinder 85 nimmt teilweise einen Teil der Harzfüllung 82 auf und hat einen geringeren Durchmesser als der Gehäusemantel 83. Bei den Härtefühler-Ausführungsformen nach Fig. 3 bis 6 und 8 ist der Zylinder 85 aus einem lichtdurchlässigen, durchsichtigen Material hergestellt.

Auf der freien, ebenen, waagrechten Oberfläche 87 der Harzfüllung 82 schwimmt bei den Ausführungsformen nach Fig. 3 bis 9 ein unterschiedlich gestalteter, noch zu beschreibender Kolben, der gegebenenfalls teilweise in die Füllung eintaucht.

Bei den Ausführungsformen nach Fig. 3 bis 6 und 12 ist eine bezüglich der Achse des Zylinders 85 konzentrisch angeordnete, auf Druck beanspruchte Schraubenfeder 88 vorgesehen, die sich einerseits am Kolben und andererseits am Gehäuse des Härtefühlers abstützt. Die Schraubenfeder 88 nimmt zentrisch eine vertikale Kolbenstange 89 auf, die an ihrem aus dem Gehäuse des Härtefühlers herausragenden oberen Ende mit einem Schaltnocken 90 versehen ist, der mit dem Betätigungshebel 91 eines elektrischen Schalters 92 zusammenwirkt, welcher das Mehrwegeventil 24 der Anlage steuern hilft. Im Ausführungsbeispiel gemäß Fig. 3 ist der Schalter 92 am Gehäuse des Härtefühlers befestigt, und zwar im allgemeinen an dem Gehäusedeckel 84.

Die Ausführungsformen nach Fig. 3 bis 6 und 12 sind je mit einer Hubvorrichtung für den Kolben zur Betätigung der Kolbenstange 89 versehen, deren unterschiedliche Ausgestaltungen noch erläutert werden.

Die Ausführungsformen nach Fig. 3 und 5, nach Fig. 4 und 6 sowie nach Fig. 8 und 9 weisen je den gleichen Kolben 93 bzw. 94 bzw. 95 auf, der vom Zylinder 85 auf und ab geführt wird. Die je von der an der Abschlußscheibe 86 angreifenden Schraubenfeder 88 direkt beaufschlagten Kolben 93 und 94 sind auf ihrer Unterseite mit einem kreiszylindrischen Stempel 96 versehen, der bei den auf der Harzfüllung 82 schwimmendem Kolben ganz in diese Füllung eingetaucht ist und oberflächlich eine Signalfarbe aufweist, die bei auftauchendem Kolben sichtbar wird. Die Kolben 93 sind kegelstumpfförmig und weisen eine der Harzfüllung 82 benachbarte, scharfe Abstreifkante 97 auf. Dagegen sind die Kolben 94 doppelkegelstumpfförmig und weisen einen Kolbenring 98 auf. Die Kolben 95 sind rein kreiszylindrisch massiv ausgestaltet.

Die Kolbenstangen 89 der Ausführungsformen nach Fig. 3 bis 6 sind in einer Bohrung der Abschlußscheibe 86 geführt.

Die Hubvorrichtung des Härtefühlers 26 weist gemäß Ausführungsform nach Fig. 3 ein kreiszylindrisches Zusatzgehäuse 100 auf, das mit seiner offenen, von der Abschlußscheibe 86 geschlossenen unteren Seite auf dem Zylinder 85 sitzt und aus einem Mantel 101 sowie einem Deckel 102 besteht, der mit einer zentralen, abgedichteten Bohrung die Kolbenstange 89 führt. Der Mantel 108 faßt den kreisförmigen Rand einer wasserdichten, gewellten Membran 103 ein, deren Zentrum an der dort durchstoßenden Kolbenstange 89 befestigt ist und die den Hohlraum im Zusatzgehäuse 100 in einen oberen und einen unteren Teil trennt, der über die Unterdruckleitung 62 an das Mehrwegeventil 24 angeschlossen ist bzw. über den von der Bohrung in der Abschlußscheibe 86 und der Kolbenstange 89 gebildeten Ringspalt mit dem Hubraum des Kolbens 93 in Verbindung steht.

Die Wirkungsweise dieser Hubvorrichtung der Härtefühler-Ausführungsform nach Fig. 3 ist folgende: Während der Regenerierungsphase der Anlage mit dem Härtefühler 26 bewirkt der Unterdruck in der Leitung 62 eine Verformung der Membran 103 und infolgedessen eine Aufwärtsbewegung der Kolbenstange 89, die den Kolben 93 entgegen der Rückstellkraft der Schraubenfeder 88 hebt, so daß Freiraum für die sich regenerierende und dabei nachquellende Harzfüllung 82 geschaffen wird. Die gequollene Harzfüllung 82 hält den schließlich wieder auf ihr schwimmenden Kolben 93 oben, da die Rückstellkraft der Feder 88 nicht zur Kompression der Füllung ausreicht.

Während der Enthärtungsphase der Anlage folgt der Kolben 93 unter dem Einfluß der Feder 88 der Oberfläche 87 der schrumpfenden Harzfüllung 82, weil in dieser Betriebsphase kein Unterdruck mehr in der Leitung 62 ist. Bei Erschöpfung des Enthärters 20 ist der Kolben 93 so weit gesunken, daß der Schaltnocken 90 den Hebel 91 des Schalters 92 betätigt.

Aufgabe des Stempels 96 ist es, auch bei den Ausführungsformen nach Fig. 4 bis 6, durch Auftauchen aus der Harzfüllung 82 den Beginn der Regenerierungsphase optisch anzuzeigen, bei welchem sich Kolben 93, bzw. 94, und Oberfläche 87 der Harzfüllung 82 voneinander zu trennen anfangen.

Bei der Härtefühler-Ausführungsform gemäß Fig. 4 besteht die Hubvorrichtung aus einem von einem Zeitschaltwerk 104 drehbaren Exzenter 105 und aus einem mit ihm zusammenwirkenden, rechteckigen Pleuelrahmen 106, der am oberen Ende der Kolbenstange 89 befestigt ist. Spätestens bei Beginn der Regenerierungsphase beginnt das Schaltwerk 104 in einem vorbestimmten Zeitpunkt den Exzenter 105 im Pleuelrahmen 106 um 180° zu drehen, wobei der Kolben 94 entgegen der Rückstellkraft der Schraubenfeder 88 von der Harzfüllung 82 abgehoben und in seine obere Umkehrstellung bewegt wird, damit die Harzfüllung störungsfrei nachquellen kann. In einem auf Erfahrungswerten über die Dauer der Enthärtungsphase beruhenden, vorbestimmten Zeitpunkt dreht das Schaltwerk 104 den Exzenter 105 um 180° weiter, wobei der Pleuelrahmen 106 von der Feder 88 unterstützt den Kolben 94 so weit absenkt, bis er sicheren Stand auf der Harzfüllung 82 nimmt. Dabei betätigt der Schaltnocken 90 schließlich den Schalter 92 über seinen Hebel 91.

Die Wirkungsweise dieser Ausführungsform entspricht im übrigen derjenigen nach Fig. 3, auch soweit nicht von der Ausgestaltung der Hubvorrichtung herrührende Unterschiede bestehen. Das gilt auch für die beiden Ausführungsformen gemäß Fig. 5 und 6.

Nach Fig. 5 besteht die Hubvorrichtung der dritten Ausführungsform des erfindungsgemäßen Härtefühlers aus einem Elektromagneten 107 mit in seiner Spule 108 verschiebbarem Anker 109, der am oberen Ende der Kolbenstange 89 befestigt ist. Die Spule 108 ist in eine nicht dargestellte elektrische Schaltung einbezogen, die dafür sorgt, daß die Spule spätestens bei Beginn der Regenerierungsphase erregt und frühestens am Ende dieser Phase, also am Beginn einer neuen Enthärtungsphase, entregt wird. Das hat zur Folge, daß der Schaltnocken 90 mittels des Hebels 91 den Schalter 92 zur Veranlassung einer neuen Regenerierungsphase betätigt, wenn der Kolben 93 weit genug auf und mit der Oberfläche 87 der schrumpfenden Harzfüllung 82 gesunken ist, und daß der Kolben der beim Regenerieren quellenden Harzfüllung 82 ausweicht.

Die Härtefühler-Ausführungsform gemäß Fig. 6 besitzt eine Hubvorrichtung, die aus einer waagrecht hin und her bewegbar geführten Schräge 110 und aus einem auf der Schräge auf- und abgleitenden Führungsstift 111 besteht, der quer zur Kolbenstange 89 an dieser befestigt ist. Die Wirkung dieser Hubvorrichtung entspricht derjenigen der Vorrichtung gemäß Fig. 5. Ihre Betätigung ist jedoch eine mechanische statt einer elektrischen.

Es ist möglich, die Hubvorrichtung so zu betätigen, daß die Schräge 110 von der Kolbenstange 89 zurückgezogen ist, so daß der Kolben 94 der sinkenden Oberfläche 87 der schrumpfenden Harzfüllung 82 kontinuierlich folgt.

Die Härtefühler-Ausführungsform gemäß Fig. 7 besitzt wieder im wesentlichen das gleiche Gehäuse wie die Ausführungsformen nach Fig. 3 bis 6. Im nicht notwendigerweise durchsichtigen, jedoch unmagnetischen Zylinder 85 ruht auf der Oberfläche 87 der Harzfüllung 82 ein von ihm geführter kreiszylindrischer Kolben 141, auf dem ein stabförmiger Permanentmagnet 142 gelagert ist, welcher mit einem magnetisch betätigbaren elektrischen Schalter 143 außerhalb des Zylinders 85 zusammenwirkt. Der Schalter 143 befindet sich in einem Stromkreis mit einer nicht dargestellten Stromquelle und einem Relais 144, das beim Sinken des Kolbens 141 anzieht und bei seinem Steigen abfällt, so daß verarbeitbare Steuerimpulse entstehen können, wenn die Harzfüllung 82 schrumpft bzw. quillt. Um eine Nord-Süd-Ausrichtung im erdmagnetischen Feld zu verhindern, kann der Stabmagnet 142 durch einen kreisscheibenförmigen Magnet mit konzentrischen Polen ersetzt werden.

Bei der Härtefühler-Ausführungsform nach Fig. 8 ist der lichtdurchlässige Zylinder 85 mit einer Lichtschranke 145 versehen, deren Lichtquelle 145.1 und Photozelle 145.2 einander auf der Außenseite des Zylinders 85 diametral gegenüberstehen. Sinkt der vom Zylinder 85 geführte, auf der Oberfläche 87 der Harzfüllung 82 ruhende Kolben 95 bei schrumpfendem Harz, dann unterbricht er die Lichtschranke 145 wie dargestellt. Steigt er dagegen bei quellendem Harz, dann gibt er diese Lichtschranke 145 frei.

Die Besonderheit der Härtefühler-Ausführungsform gemäß Fig. 9 besteht darin, daß der Zylinder 85 nichtmetallisch, der Kolben 95 aber metallisch ist, so daß er durch den Zylinder einen auf Kapazitätsänderungen ansprechenden elektrischen Schalter 146 betätigen kann. Dies geschieht im einen oder ihm entgegengesetzten Sinne, wenn die verjüngte Säule der Harzfüllung 82 den Kolben 95 aus dem Einflußbereich des Schalters 146 beim Quellen heraushebt und beim Schrumpfen in diesem Bereich hineinsinken läßt.

Aus Fig. 10 ist eine Variante der Anlage gemäß Fig. 1 mit einer besonderen in Fig. 11 dargestellten Härtefühler-Ausführungsform ersichtlich. Auf einen Enthärter 150 mit Harzfüllung 152 ist dort, wo aus seinem Gehäuse 154 das nicht gezeichnete Steigrohr austritt, ein Mehrwegeventil 156 gesetzt, dessen Funktionen hier nur noch angedeutet sind.

Als Taucheinheit ist in die Harzfüllung 152 des Enthärters 150 der Härtefühler 158 versenkt, der an einem Kabel 160 hängt, dessen Isoliermantel 161 von zwei Durchführungen 162 und 163 gefaßt ist, die in passenden Durchbrüchen 164 bzw. 165 des Enthärter-Gehäuses 154 bzw. eines Gehäusedeckels 166 des Härtefühlers 158 angeordnet sind. Der Durchbruch 164 am Enthärter 150 liegt oben in der Nähe des Mehrwegeventiles 156, also über der Harzfüllung 152 und beim Steigrohr.

Der Härtefühler 158 weist als Gehäuse 167 ein kreiszylindrisches, relativ langes Rohr auf, dessen oberes Ende durch den genannten Deckel 166 verschlossen ist und in dessen unteres Ende ein mittels eines Schraubendrehers verstellbarer Justierkolben 168 eingeschraubt ist. Auf diesen Kolben ist eine Füllung 169 aus Schrumpfharz gepackt, deren ebene, waagrechte Oberfläche 170 in größerem Abstand zum Gehäusedeckel 166 liegt. An seinem oberen und unteren Ende, also unterhalb des Gehäusedeckels 166 bzw. oberhalb des Justierkolbens 168, ist der Mantel des Gehäuses 167 mit je einem Spaltfilter 171 bzw. 172 versehen, der einfach durch Schlitze gebildet ist, deren Breite einen Austritt der Harzkörner verhindert. Auf der Oberfläche 170 der Harzfüllung 169 steht ein schwimmender luftgefüllter Hohlkolben 173 in Form eines Kreiszylinders, dessen Außendurchmesser um mehr als das Toleranzmaß kleiner ist als der Innendurchmesser des Gehäuses 167, so daß dazwischen ein Ringspalt 174 für den Durchtritt von Wasser gebildet ist. Auf dem Kolben 173 sitzt eine ihm entsprechende zylindrische Verlängerung 175 mit einem Hohlraum 176, die oben offen ist und an ihrem Fuß mehrere Durchflußdurchbrüche 177 aufweist, so daß Wasser aus dem Ringspalt 174 in den Hohlraum 176 eintreten und vom Hohlraum in den Ringspalt austreten kann. Im Hohlraum 176 befindet sich am oberen Ende der Verlängerung 175 ein kreisringförmiger Permanentmagnet 178, der am oberen Rand der Verlängerung innen befestigt ist. Durch den Magneten 178 verlaufen zwei aus dem Isoliermantel 161 austretende, selbst noch einmal isolierte Adern 179 des Kabels 160, welche endseitig an einen Reed-Schalter 180 angeschlossen sind, der hochkant steht und in den Durchbruch 181 des Permanentmagneten 178 paßt, von dem er bei relativer Annäherung im Sinne der Verbindung der Adern 179 betätigt wird und betätigt ist, wenn der Magnet mit seinem Durchbruch den Schalter umringt. Damit das möglich ist, ist der lichte Abstand des Permanentmagneten 178 vom Hohlkolben 173 etwas größer als die Höhe des Reed-Schalters 180, der sich in dem dadurch bestimmten dazwischenliegenden Teil des Hohlraumes 176 befindet, wenn die Harzfüllung 169, wie in Fig. 11 dargestellt, maximal gequollen ist, der Enthärter 150 also gerade regeneriert oder nur kaum zum Enthärten beansprucht worden ist.

Die Wirkungsweise des Härtefühlers 158 ist folgende: Der Hohlkolben 173 ruht ständig auf der Oberfläche 170 der Harzfüllung 169. Falls diese, ausgehend von dem Zustand gemäß Fig. 11, beim Enthärten, währenddessen hartes Wasser nicht nur durch die Harzfüllung 152 des Enthärters 150, sondern eben auch durch die Harzfüllung 169 des im Enthärter enthaltenen Härtefühlers 158 strömt, und zwar beim Spaltfilter 171 hinein und beim Spaltfilter 172 heraus; falls also die Härtefühler-Harzfüllung 169 schrumpft, sinkt der Kolben mit der Oberfläche 170 ab, wobei schließlich der Permanentmagnet 178 den Reed-Schalter 180 nach Annäherung betätigt. Während der Regenerierungsphase quillt die Härtefühler-Harzfüllung 169, wobei der Hohlkolben 173 mit der Oberfläche 170 der Harzfüllung hochsteigt und schließlich die Betätigung des Reed-Schalters 180 durch den Permanentmagneten 178 bei Entfernung aufgehoben wird. Mittels des Ein- und Ausschaltimpulses wird über das Kabel 160, das zur elektrischen Ventilsteuerung an das Mehrwegeventil 156 angeschlossen ist, die Regenerierungsphase eingeleitet bzw. beendet.

Abschließend sei erwähnt, daß das Schwimmen oder Schweben des Hohlkolbens 173 auf der Oberfläche 170 der Harzfüllung 169 natürlich voraussetzt, daß das spezifische Gewicht der auf der Oberfläche lastenden Einheit aus Hohlkolben, seiner Verlängerung 175 und Magnet 178 höchstens so groß ist wie die Wichte der Harzfüllung. Andernfalls würde diese Einheit einsinken.

Die zehnte und letzte Ausführungsform des erfindungsgemäßen Härtefühlers schließlich ist mit der Hubvorrichtung für die Härtefühler-Ausführungsform gemäß Fig. 6 versehen und weicht von dieser dadurch ab, daß der Gehäusemantel 83, ein konischer Gehäusedeckel 84', der Zylinder 85 und ein Abschlußteil 86' einstückig ausgebildet sind, daß die Harzfüllung 82 von oben nach unten von Testwasser durchströmt wird und daß dazu der Abschlußteil 86' einen waagrecht gebohrten Einlaß 200 sowie der oben zur Lagerung der Schraubenfeder 88 zylindrische und in der Mitte (über dem Stempel 96) kegelstumpfförmige Kolben 202 Durchbrüche in Form von Schlitzen 204 aufweist, die Wasser durchlassen, aber Harzkörner zurückhalten, und der Gehäusemantel 83 eine geschlitzte Filterscheibe 206 aufnimmt, die die Harzfüllung 82 trägt, und zwar in einstellbarer Höhe. Zur Höheneinstellung dient ein im unteren Ende des Gehäusemantels 83 unter Abdichtung vertikal geführtes trichterartiges Stützteil 208, das aus diesem Ende herausragt und mit seinem Auslaß 210 durch eine Überwurfmutter 212 greift, die auf das genannte Ende geschraubt ist. Durch Drehen der Mutter 212 kann die Höhenlage der nur am Rand unterstützten Filterscheibe 206 verstellt werden.

**Patentansprüche**

1. Härtefühler für eine Wasserenthärtungsanlage, mit einer regenerierbaren Füllung aus ionenaustauschendem Schrumpfharz, welche eine einzige freie Oberfläche aufweist, deren Flächennormale die Ausdehungsrichtung beim Regenerieren darstellt, gekennzeichnet durch einen Kolben (93, 94, 95, 141, 173, 202), der wenigstens während der Härtefühlung die freie Oberfläche (87) berührt und der entweder ständig auf dieser frei schwimmt (Fig. 7 bis 9, 11) oder während der Regenerierung mittels einer Hubvorrichtung (Fig. 3 bis 6, 12) über der freien Oberfläche in der Schwebe gehalten ist.

2. Härtefühler nach Anspruch 1, mit einer Feder, deren Rückstellkraft der Quellkraft der Harzfüllung entgegengesetzt ist, dadurch gekennzeichnet, daß die Feder (88) am Kolben (93, 94, 202) angreift (Fig. 3 bis 6, 12).

3. Härtefühler nach Anspruch 1 oder 2, dadurch gekennzeichnet, daß der Kolben (94) zum Verdichten der Harzfüllung (82) konisch geformt ist (Fig. 4, 6).

4. Härtefühler nach Anspruch 1 oder 2, dadurch gekennzeichnet, daß der Kolben (93, 202) eine scharfe Abstreifkante (97) auf seiner der Harzfüllung (82) zugewandten Stirnseite aufweist (Fig. 3, 5, 12).

5. Härtefühler nach Anspruch 1 oder 2, dadurch gekennzeichnet, daß der Kolben (94) mit einem Kolbenring (98) versehen ist (Fig. 4, 6).

6. Härtefühler nach einem der Ansprüche 1 bis 5, dadurch gekennzeichnet, daß der Kolben (93, 94, 202) mit einem in die Harzfüllung (82) eintauchenden, verjüngten Stempel (96) versehen ist (Fig. 3 bis 6, 12).

7. Härtefühler nach einem der Ansprüche 1, 2 und 4, dadurch gekennzeichnet, daß der Kolben (93) scheibenförmig ausgebildet ist (Fig. 3, 5).

8. Härtefühler nach einem der Ansprüche 1 bis 7, dadurch gekennzeichnet, daß der Kolben (141) mit einem Permanentmagneten (142) gekoppelt ist, durch den ein berührungsloser elektrischer Schalter (143) magnetisch betätigbar ist (Fig. 7).

9. Härtefühler nach einem der Ansprüche 1 bis 7, dadurch gekennzeichnet, daß er mit einer Kolbenstange (89) versehen ist, durch deren herausragendes Ende ein elektrischer Schalter (92) mechanisch betätigbar ist (Fig. 3 bis 6, 12).

10. Härtefühler nach Anspruch 9, dadurch gekennzeichnet, daß die Hubvorrichtung (Fig. 3 bis 6, 12) an der Kolbenstange (89) angreift.

11. Härtefühler nach Anspruch 10, dadurch gekennzeichnet, daß die Hubvorrichtung eine bewegbare Steuerkurve (110) und einen mit ihr zusammenwirkenden Steuernocken (111) aufweist, der an der Kolbenstange (89) befestigt ist (Fig. 6, 12).

12. Härtefühler nach Anspruch 10, dadurch gekennzeichnet, daß die Hubvorrichtung einen drehbaren Exzenter (105) und einen mit ihm zusammenwirkenden Pleuelrahmen (106) aufweist, der mit der Kolbenstange (89) fest verbunden ist (Fig. 4).

13. Härtefühler nach Anspruch 10, dadurch gekennzeichnet, daß die Hubvorrichtung einen Elektromagneten (107) mit einem verschiebbaren Anker (109) aufweist, der mit der Kolbenstange (89) fest verbunden ist (Fig. 5).

14. Härtefühler nach Anspruch 10, dadurch gekennzeichnet, daß die Hubvorrichtung eine zentral an der Kolbenstange (89) und peripher an einem mit dem Härtefühler (26) verbundenen Zusatzgehäuse (100) befestigte, wasserdichte Membran (103) und eine auf der dem Kolben (93) abgekehrten Seite der Membran (103) an das luftdichte Zusatzgehäuse (100) angeschlossene Verbindungsleitung (62) aufweist, die innerhalb des Gehäuses (25) eines Mehrwegeventiles (24) der Wasserenthärtungsanlage in eine Leitung (73) mündet, welche von einem Salzbehälter (22) zu einem Enthärter (20) der Anlage führt (Fig. 1 bis 3).

15. Härtefühler nach einem der Ansprüche 1 bis 6, dadurch gekennzeichnet, daß er mit einem berührungslosen Schalter (146) versehen ist, der durch den Kolben (95) kapazitiv betätigbar ist (Fig. 9).

16. Härtefühler nach einem der Ansprüche 1 bis 8 und 15, dadurch gekennzeichnet, daß er als Taucheinheit (158) ausgebildet ist, die in eine Harzfüllung (152) eines Enthärters (150) der Wasserenthärtungsanlage versenkbar ist (Fig. 10); daß er von einem Teil des in der Harzfüllung (152) des Enthärters (150) strömenden Wassers auf einem Ersatzweg (171 – 172) durchströmbar ist; und daß er einen eingebauten elektrischen Schalter (180) aufweist, der über ein mindestens zweiadriges, durch die Harzfüllung (152) des Enthärters (150) auf die Außenseite des Enthärters führbares Kabel (160) mit einer elektrischen Steuerung eines Ventils der Wasserenthärtungsanlage verbindbar ist (Fig. 10, 11); sowie gekennzeichnet durch einen luftgefüllten Hohlkolben (173), der auf der Harzfüllung (169) schwimmt und relativ zu dem stationären Schalter (180) im Gehäuse (167) des Härtefühlers verschiebbar ist (Fig. 11).

17. Härtefühler nach Anspruch 16, dadurch gekennzeichnet, daß als elektrischer Schalter ein Reed-Schalter (180) und zu dessen Betätigung ein kolbenfester Permanentmagnet (178) vorgesehen ist (Fig. 11).

18. Härtefühler nach den Ansprüchen 16 und 17, dadurch gekennzeichnet, daß der Hohlkolben (173) mit einer zylindrischen Verlängerung (175) zur Aufnahme des freihängenden Reed-Schalters (180) versehen ist, welche in Kolbennähe Durchflußdurchbrüche (177) aufweist und mit ihrem kolbenfernen Rand den kreisringförmigen Permanentmagneten (178) aufnimmt (Fig. 11).

19. Härtefühler nach einem der Ansprüche 1 bis 18, dadurch gekennzeichnet, daß die Harzfüllung (82) an einem in deren Ausdehnungsrichtung verstellbar am Gehäusemantel (83) des Fühlers gelagerten Teil (206) anliegt (Fig. 12).

20. Härtefühler nach einem der Ansprüche 1 bis 15 und 19, dadurch gekennzeichnet, daß der Kolben (202) mindestens einen Durchbruch (204) aufweist; daß der Einlaß (200) des Härtefühlers oberhalb des Kolbens (202) angeordnet ist; und daß er eine unterhalb der Harzfüllung (82) angeordnete, diese tragende Filterscheibe (206) aufweist, die über dem Auslaß (210) des Härtefühlers liegt (Fig. 12).

21. Anlage zum Enthärten von Wasser, mit einem Ionenaustauscher-Kunstharz enthaltenden, regenerierbaren Enthärter, mit einem übersättigte Kochsalzlösung enthaltenden Salzbehälter; mit mehreren Ventilen, die an Einlaß und Auslaß des Enthärters sowie an den Salzbehälter und an eine Abwasserleitung angeschlossen und mit einer Zuleitung für hartes Wasser sowie einer Ableitung für weiches Wasser versehen sind; und mit einem Härtefühler nach einem der Ansprüche 1 bis 20, dessen Einlaß mit dem Enthärter verbunden ist, dadurch gekennzeichnet, daß der Auslaß des Härtefühlers (26, 28) über ein die genannten Ventile zusammenfassendes Mehrwegeventil (24) mit der Ableitung für weiches Wasser verbindbar ist (Fig. 1).

22. Anlage nach Anspruch 21, dadurch gekennzeichnet, daß der Auslaß des Härtefühlers (26, 28) an eine Bohrung im Gehäuse (25) des Mehrwegeventils (24) angeschlossen ist, welche in einen Einlaß (50) des Ventils (24) mündet, der mit dem Auslaß (34) des Enthärters (20) verbunden ist (Fig. 1).

23. Anlage nach Anspruch 22, deren Mehrwegeventil in der Nähe des Anschlusses der Abwasserleitung ein Auslaßventil aufweist, dadurch gekennzeichnet, daß der Auslaß des Härtefühlers (26, 28) an eine Bohrung (79) im Gehäuse (25) des Mehrwegeventils (24) angeschlossen ist, welche in der Nähe des Auslaßventiles (78) zur Abwasserleitung hin ausmündet (Fig. 1).

## Claims

1. Hardness probe for a water softening plant, with a regenerable filling of ion-exchanging shrinking resin having a single free surface, the surface normal of which represents the direction of expansion upon regeneration, characterised by a piston (93, 94, 95, 141, 173, 202) which at least during sensing of the water hardness, contacts the free surface and either floats freely on this surface constantly (Figs. 7 to 9 and 11) or, during regeneration, is held suspended above the free surface by means of a lifting device (Figs. 3 to 6, 12).

2. A hardness probe according to Claim 1, with a spring, the return force of which counteracts the swelling force of the resin filling, characterised in that the spring (88) engages the piston (93, 94, 202) (Figs. 3 to 6, 12).

3. A hardness probe according to Claim 1 or 2, characterised in that the piston (94) is conically shaped to compress the resin filling (82) (Figs. 4, 6).

4. A hardness probe according to Claim 1 or 2, characterised in that the piston (93, 202) has a sharp scraping edge (97) on its end face which is towards the resin filling (82) (Figs. 3, 5, 12).

5. A hardness probe according to Claim 1 or 2, characterised in that the piston (94) is provided with a piston ring (98) (Figs. 4, 6).

6. A hardness probe according to one of Claims 1 to 5, characterised in that the piston (93, 94, 202) is provided with a tapered stamp (96) which plunges into the resin filling (82) (Figs. 3 to 6, 12).

7. A hardness probe according to one of Claims 1, 2 and 4, characterised in that the piston (93) is disc-shaped in construction (Figs. 3, 5).

8. A hardness probe according to one of Claims 1 to 7, characterised in that the piston (141) is coupled to a permanent magnet (142) by which a contactless electrical switch (143) can be magnetically actuated (Fig. 7).

9. A hardness probe according to one of Claims 1 to 7, characterised in that it is provided with a piston rod (89) by the protruding end of which an electrical switch (92) can be mechanically actuated (Figs. 3 to 6, 12).

10. A hardness probe according to Claim 9, characterised in that the lifting device (Figs. 3 to 6, 12) engages the piston rod (89).

11. A hardness probe according to Claim 10, characterised in that the lifting device has a movable control cam plate (110) and, co-operating with it, a control cam follower (111) which is fixed to the piston rod (89) (Figs. 6, 12).

12. A hardness probe according to Claim 10, characterised in that the lifting device has a rotatable eccentric member (105) and, co-operating with it, a connecting rod frame (106) which is rigidly connected to the piston rod (89) (Fig. 4).

13. A hardness probe according to Claim 10, characterised in that the lifting device has an electromagnet (107) with a displaceable armature (109) which is rigidly connected to the piston rod (89) (Fig. 5).

14. A hardness probe according to Claim 10, characterised in that the lifting device has a watertight diaphragm (103) fixed centrally on the piston rod (89) and peripherally on an auxiliary housing (100) connected to the hardness probe (26), and a connecting line (62) which is connected to the airtight auxiliary housing (100) on that side of the diaphragm (103) which is remote from the piston (93), the connecting line (62) discharging inside the housing (25) of a multi-way valve (24) of the water softening plant into a line (73) which leads from a salt container (22) to a softener (20) in the plant (Figs. 1 to 3).

15. A hardness probe according to one of Claims 1 to 6, characterised in that it is provided with a contactless switch (146) which can be capacitatively actuated by the piston (95) (Fig. 9).

16. A hardness probe according to one of Claims 1 to 8 and 15, characterised in that it is constructed as a plunger unit (158) which can be lowered into a resin filling (152) in a softener (150) in the water softening plant (Fig. 10) and in that it can have flowing through it, through an auxiliary path (171 to 172) a part of the water flowing in the resin filling (152) of the softener (150), and in that it has a built-in electrical switch (180) which can be connected to an electrical control system of a valve in the water softening plant by an at least 2-core cable (160) which can be fed through the resin filling (152) of the softener (150) on the outside of the softener (Fig. 10, 11), and also characterised by an airfilled hollow piston (173) which floats on the resin filling (169) and which is displaceable in relation to the stationary switch (180) in the housing (167) of the hardness probe (Fig. 11).

17. A hardness probe according to Claim 16, characterised in that as an electrical switch a reed switch (180) is provided together with a permanent magnet (178) rigid with the piston, for actuation of the aforesaid switch (Fig. 11).

18. A hardness probe according to Claims 16 and 17, characterised in that the hollow piston (173) is provided with a cylindrical extension (175) to accommodate the freely-suspended reed switch (180) and which has in the vicinity of the piston throughflow ports (177) while its edge remote from the piston accommodates the circular permanent magnet (178) (Fig. 11).

19. A hardness probe according to one of Claims 1 to 18, characterised in that the resin filling (82) bears on a part (206) which is mounted on the housing shell (83) of the probe so as to be adjustable in its direction of expansion (Fig. 12).

20. A hardness probe according to one of Claims 1 to 15 and 19, characterised in that the piston (202) has at least one aperture (204) and in that the inlet (200) of the hardness probe is located above the piston (202) and in that it has, disposed under the resin filling (82) and supporting it, a filter disc (206) which lies above the outlet (210) of the hardness probe (Fig. 12).

21. Plant for the softening of water, having a regenerable softener containing an ion exchanging synthetic resin, with a salts container containing a supersaturated cooking salt solution, and with a plurality of valves which are connected to inlet and outlet of the softener and to the salts container and to a drain line and with a feed line for hard water and a discharge line for soft water, and with a hardness probe according to one of Claims 1 to 20, the inlet of which is connected to the softener, characterised in that the outlet of the hardness probe (26, 28) can be connected to the soft water drain line via a multiway valve (24) which groups together the said valves (Fig. 1).

22. Plant according to Claim 21, characterised in that the outlet of the hardness probe (26, 28) is connected to a bore in the housing (25) of the multiway valve (24), the bore discharging into an inlet (50) of the valve (24) and which is connected to the outlet (34) of the softener (20) (Fig. 1).

23. Plant according to Claim 22, the multiway valve of which has an outlet valve in the vicinity of the drain line connection, characterised in that the outlet from the hardness probe (26, 28) is connected to a bore (79) in the housing (25) of the multiway valve (24) which discharges in the vicinity of the outlet valve (78) to the drain line (Fig. 1).

## Revendications

1. Détecteur de dureté pour une installation d'adoucissement de l'eau, avec une charge régénérable de résine échangeuse d'ions susceptible de se contracter, qui présente une surface libre unique dont la normale à la surface représente la direction de dilatation lors de la régénération, caractérisé par un piston (93, 94, 95, 141, 173, 202) qui, au moins pendant la détection de dureté, touche la surface libre (87) et qui, soit flotte continuellement librement sur celle-ci (Fig. 7 à 9, 11), soit est maintenu en suspension, pendant la régénération, au-dessus de la surface libre, au moyen d'un dispositif de levée (Fig. 3 à 6, 12).

2. Détecteur de dureté suivant la revendication 1, avec un ressort dont la force de rappel est opposée à la force de gonflement de la charge de résine, caractérisé en ce que le ressort (88) attaque le piston (93, 94, 202) (Fig. 3 à 6, 12).

3. Détecteur de dureté suivant la revendication 1 ou 2, caractérisé en ce que le piston (94) est de forme conique pour comprimer la charge de résine (82) (Fig. 4, 6).

4. Détecteur de dureté suivant la revendication 1 ou 2, caractérisé en ce que le piston (93, 202) présente une arête de raclage tranchante (97), sur sa face frontale dirigée vers la charge de résine (82) (Fig. 3, 5, 12).

5. Détecteur de dureté suivant la revendication 1 ou 2, caractérisé en ce que le piston (94) est pourvu d'une bague de piston (98) (Fig. 4, 6).

6. Détecteur de dureté suivant l'une quelconque des revendications 1 à 5, caractérisé en ce que le piston (93, 94, 202) est pourvu d'un tampon (96) réduit, plongeant dans la charge de résine (82) (Fig. 3 à 6, 12).

7. Détecteur de dureté suivant l'une quelconque des revendications 1, 2 et 4, caractérisé en ce que le piston (93) est conformé en plateau (Fig. 3, 5).

8. Détecteur de dureté suivant l'une quelconque des revendications 1 à 7, caractérisé en ce que le piston (141) est accouplé à un aimant permanent (142) par lequel un interrupteur électrique (143) qui peut être actionné sans devoir être touché, peut être commandé magnétiquement (Fig. 7).

9. Détecteur de dureté suivant l'une quelconque des revendications 1 à 7, caractérisé en ce qu'il est pourvu d'une tige de piston (89) par l'extrémité dépassante de laquelle peut être actionné mécaniquement un interrupteur électrique (92) (Fig. 3 à 6, 12).

10. Détecteur de dureté suivant la revendication 9, caractérisé en ce que le dispositif de levée (Fig. 3 à 6, 12) attaque la tige de piston (89).

11. Détecteur de dureté suivant la revendication 10, caractérisé en ce que le dispositif de levée comporte une came de commande mobile (110) et un bossage de commande (111) coopérant avec elle, qui est fixé à la tige de piston (89) (Fig. 6, 12).

12. Détecteur de dureté suivant la revendication 10, caractérisé en ce que le dispositif de levée comporte un excentrique (105) capable de tourner et un cadre de bielle (106) coopérant avec lui, lequel est relié rigidement à la tige de piston (89) (Fig. 4).

13. Détecteur de dureté suivant la revendication 10, caractérisé en ce que le dispositif de levée comporte un électroaimant (107) à armature mobile (109) qui est reliée rigidement à la tige de piston (89) (Fig. 5).

14. Détecteur de dureté suivant la revendication 10, caractérisé en ce que le dispositif de levée présente une membrane (103) étanche à l'eau, fixée en son centre à la tige de piston (89) et périphériquement à un boîtier additionnel (100) relié au détecteur de dureté (26), et un conduit de liaison (62) raccordé au boîtier additionnel (100) étanche à l'air, du côté de la membrane (103) qui n'est pas orienté vers le piston (93), ce conduit de liaison débouchant à l'intérieur du boîtier (25) d'une valve à voies multiples (24) de l'installation d'adoucissement de l'eau, dans un conduit (73) qui va d'un réservoir de sel (22) à un adoucisseur (20) de l'installation (Fig. 1 à 3).

15. Détecteur de dureté suivant l'une quelconque des revendications 1 à 6, caractérisé en ce qu'il est pourvu d'un interrupteur actionnable sans devoir être touché (146) qui peut être actionné par le piston (95), par voie capacitive (Fig. 9).

16. Détecteur de dureté suivant l'une quelconque des revendications 1 à 3 et 15, caractérisé en ce qu'il est conformé en unité plongeuse (156) que l'on peut enfoncer dans une charge de résine (152) d'un adoucisseur (150) de l'installation pour adoucir l'eau (Fig. 10); en ce qu'il peut être traversé, sur une voie de remplacement (171 – 172), par une partie de l'eau qui s'écoule dans la charge de résine (152) de l'adoucisseur (150); et en ce qu'il comporte un interrupteur électrique incorporé (180) qui peut être relié, à l'aide d'un câble (160) à au moins deux âmes qu'on peut faire passer, à travers la charge de résine (152) de l'adoucisseur (150), à l'extérieur de l'adoucisseur, à une commande électrique d'une valve de l'installation d'adoucissement de l'eau (Fig. 10, 11); ainsi que caractérisé par un piston creux (173) rempli d'air, qui flotte sur la charge de résine (169) et qui est déplaçable par rapport à l'interrupteur immobile (180) dans le boîtier (167) du détecteur de dureté (Fig. 11).

17. Détecteur de dureté suivant la revendication 16, caractérisé en ce que, comme interrupteur électrique, on a prévu un interrupteur à lame (180) et pour son actionnement, un aimant permanent (178) solidaire du piston (Fig. 11).

18. Détecteur de dureté suivant les revendications 16 et 17, caractérisé en ce que le piston creux (173) est pourvu d'un prolongement cylindrique (175) pour recevoir l'interrupteur à lame (180) librement suspendu, qui présente, à proximité du piston, des voies de passage (177) et qui reçoit, par son bord éloigné du piston, l'aimant permanent (178) en forme d'anneau circulaire (Fig. 11).

19. Détecteur de dureté suivant l'une quelconque des revendications 1 à 18, caractérisé en ce que la charge de résine (82) s'applique à une pièce (206) montée de façon réglable, dans sa direction de dilatation, sur la surface latérale (83) du détecteur (Fig. 12).

20. Détecteur de dureté suivant l'une quelconque des revendications 1 à 15 et 19, caractérisé en ce que le piston (202) présente au moins une voie de passage (204); en ce que l'entrée (200) du détecteur de dureté est disposée au-dessus du piston (202); et en ce qu'il comporte un plateau filtrant (206) situé en dessous de la charge de résine (82) et la soutenant, qui se trouve au-dessus de la sortie (210) du détecteur de dureté (Fig. 12).

21. Installation pour l'adoucissement de l'eau, avec un adoucisseur régénérable contenant une résine synthétique échangeuse d'ions, avec un réservoir de sel contenant une solution de sel de cuisine sursaturée; avec plusieurs valves qui sont raccordées à l'entrée et à la sortie de l'adoucisseur, ainsi qu'au réservor de sel et à un conduit de départ d'eau de rebut, et avec un conduit d'amenée pour de l'eau dure, ainsi qu'un conduit de départ pour l'eau douce; et avec un détecteur de dureté suivant l'une quelconque des revendications 1 à 20, dont l'entrée est reliée à l'adoucisseur, caractérisée en ce que la sortie du détecteur de dureté (26, 28) peut être raccordée, par l'intermédiaire d'une valve (24) à voies multiples groupant les valves précitées, au conduit de départ pour l'eau douce (Fig. 1).

22. Installation suivant la revendication 21, caractérisée en ce que la sortie du détecteur de dureté (26, 28) est reliée à une forure du boîtier (25) de la valve à voies multiples (24), qui déboche dans une entrée (50) de la valve (24), qui est reliée à la sortie (34) de l'adoucisseur (20) (Fig. 1).

23. Installation suivant la revendication 22, dont la valve à voies multiples présente, à proximité du raccord du conduit d'eau de rebut, une valve de sortie, caractérisée en ce que la sortie du détecteur de dureté (26, 28) est raccordée à une forure (79) dans le boîtier (25) de la valve à voies multiples (24), qui débouche à proximité de la valve de sortie (78), vers le conduit d'eau de rebut (Fig. 1).

Fig.1,

Fig.2.

Fig.3.

Fig.4.

Fig.5.

Fig.6.

_Fig.7._

_Fig.8._

_Fig.9._

Fig.10.

AUS   EIN
Kanal    H₂O

Sole

Fig.11.

Fig.12.